# EUROPEAN PATENT SPECIFICATION

(11) **EP 2 496 863 B1**
(45) Date of publication and mention of the grant of the patent: **04.06.2014**
(21) Application number: 10828025.6
(22) Date of filing: 03.11.2010
(51) Int. Cl.: F16H 57/027

(54) **BREATHING AND LUBRICATING ARRANGEMENT FOR AN ENCLOSED MECHANICAL SYSTEM**
ENTLÜFTUNGS- UND SCHMIERANORDNUNG FÜR EIN EINGEKAPSELTES MECHANISCHES SYSTEM
DISPOSITIF DE VENTILATION ET DE LUBRIFICATION POUR UN SYSTÈME MÉCANIQUE FERMÉ

(30) Priority: 06.11.2009 IN MU25712009; 11.11.2009 IN MU26132009
(43) Date of publication of application: 12.09.2012
(73) Proprietor: Tata Motors Limited, 400 001 Mumbai, Maharashtra (IN)
(72) Inventor: V. JANARDHANAN, Mumbai 400 001 Maharashtra (IN)
(74) Representative: Ruuskanen, Juha-Pekka
(86) International application number: PCT/IN2010/000721
(87) International publication number: WO 2011/055384

(56) References cited:
- DE-A1- 3 939 050
- DE-C1- 19 940 235
- DE-C1- 19 940 235
- JP-A- 7 150 925
- JP-A- 7 150 925
- US-A- 2 818 047
- US-A- 3 114 579
- US-A- 4 987 795

## Description

### FIELD OF THE INVENTION

The present invention is related to a breathing and lubricating arrangement for enclosed mechanical systems and more particularly is related to an epicyclic gear system having a novel lubrication and breathing arrangement.

### BACKGROUND OF THE INVENTION

In closed mechanical systems with rotating parts the breathers are provided in remote locations of the system so that the lubricating oil of the system does not pass to the outside of the system through the breathers, whereas air exchange between the outside and inside of the system is possible through the breathers. In some mechanical systems which have rotating parts, there is difficulty in providing a breather because of lack of remote locations which can avoid oil passage through the breather. Prior art US4651704 describes a breathing system which employs centrifugal force to separate oil mist from air. This system deliberately feeds the oil mist containing air into axial passages in a rotating shaft and then separates the mist from air through radial passages in the shaft by centrifugal forces. This system does not prevent oil entry into the radial passages during low speeds or when the shaft is stationary. Also these systems create an air pumping effect due to radial passages inside the enclosed system which pressurize the system. Another device which makes use of centrifugal forces for breathing of oil-lubricated systems is Japanese patent application publication number 07150925, in accordance with the preamble of claim 1.

Mechanical systems like epicyclic gear systems customarily use a pump for lubrication, with the oil running through complex passages to reach the target lubricating point. These systems are burdened with losses and present energy losses in the drive train; because of the pump.

Prior art US4072067 describes about a Planetary gearing without any lubricating pump. The outermost member of the gearing that is the ring gear encloses the other elements of the epicyclic and is filled with the lubricating oil. The lubricating oil splashes with the rotation of the carrier and the sun and the system gets lubricated. The rotation axis of the system is only vertical to prevent escape of oil & provide easy breathing. However complications for breathing arise in such systems when the axis of rotation is horizontal or inclined, wherein it is difficult to prevent oil escape.

### OBJECTS OF THE INVENTION

The object of the invention is to provide a breathing system for above such mechanical systems where a remote location for a breather is not available. Another object of the invention is to provide a breathing system of which one end is located in an oil filled/splashing area and other end is located or communicating to atmosphere.

Yet another object of the invention is to provide a breathing system which is part of input/output rotating shaft of a closed mechanical system.

Yet another object of the invention is to prevent oil entry into the radial passages of the shaft exposed to the oil during low speeds of shaft or when the shaft is stationary and also compensate the air pumping effect of the radial passages in the shaft.

Yet another object of the invention is to avoid losses by eliminating the pump for lubrication while providing lubrication to the system efficiently, only when required.

Yet another object of the invention is to reduce the complexity associated with pump lubrication systems because of the additional parts and complex oil passages.

### SUMMARY OF THE INVENTION

Aspects of the invention are set out in the appended claims.

### BRIEF DESCRIPTION OF THE DRAWINGS

The invention will now be described, by way of example, with reference to the accompanying drawings in which:
FIG. 1 shows a sketch of the breathing system for enclosed mechanical systems;
FIG. 2 shows a sketch of the lubricating arrangement with breathing provision according to the present invention for an epicyclic gear system with an internal gear being the outermost member of the epicyclic system;
FIG. 3 is a sketch of the lubricating arrangement according to the present invention for an epicyclic gear system, with a planet carrier being the outermost member of the epicyclic system, formed as an envelope to enclose the gears;
FIG. 4 is a sketch of the lubricating arrangement according to the present invention for an epicyclic gear system, with an alternative sealing, assembly and oil drain arrangement provided at the outermost member of the epicyclic system;
FIG. 5 is a sketch of an arrangement for reducing the oil quantity in the system and streamlining the oil flow for reducing losses in the system.

### DETAILED DESCRIPTION OF THE INVENTION

Referring now to the drawings wherein the showings are for the purpose of illustrating a preferred embodiment of the invention only, and not for the purpose of limiting the same.

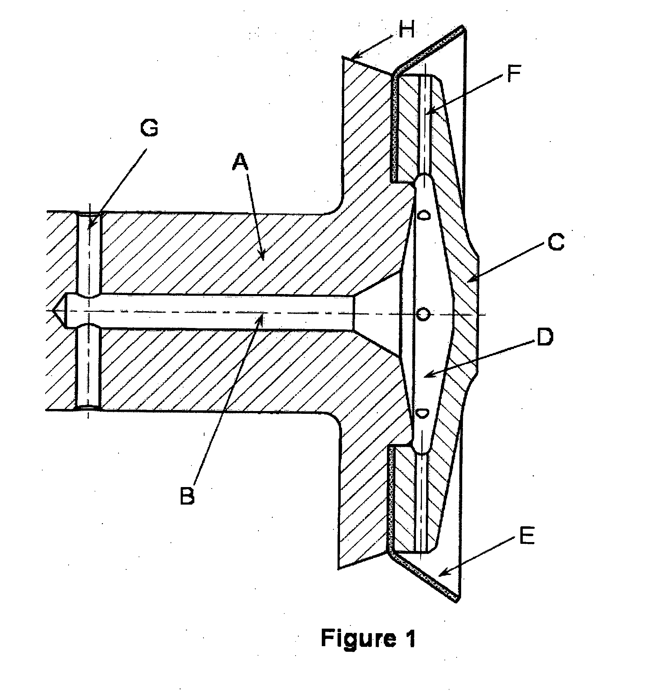

Referring to Figure 1, the rotating shaft (A) of a mechanical system (not shown) which has exposure to oil contained in a closed chamber at one end and exposure to atmosphere at other end is adapted for the breathing. The shaft (A) has at least one axially extended air passage (B). The mechanical system is enclosed in a chamber wherein atleast one of the component of mechanical system, the shaft (A) is extended outside the enclosure. The oil is filled in the chamber for lubrication of the system and while rotation of the elements of the system, the oil gets splashed for lubricating the system.

An oil deflector (E) and disc (C) are attached/built-in to the shaft (A). The disc having an oil gallery (D) formed around the disc center and radial passages are extended outward from it. The deflector (E) is made of either plastic or sheet metal and attached to the shaft (A) by suitable fastening means. The mating surface between them is sealed to prevent oil entry between them. An oil gallery (D) is formed by the disc (C) and the shaft (A). One end of the air passage (B) is connected or communicating to the oil gallery (D) and the other end is communicating directly to the atmosphere outside of the mechanical system or is communicating to the atmosphere outside of the mechanical system through radial passages (G) on the shaft (A). The air passages (G) can be inclined to the axis of the shaft (A) for the convenience of packaging or manufacturing ease or any other requirements. The air passage (G) can also directly extend from the axial passage (B) formed like radial openings and thereby avoid attachment of the disc. Atleast two passages (G) which are radially opposite to each other are required for avoiding imbalances in the shaft (A). If there are more than two radial air passages, then they should be at equal angular intervals to avoid imbalances. The disc (C) has at least two radial oil passages (F)/radial perforations. The air passages (F) can also be inclined to the axis of the shaft (A) for the convenience of packaging or manufacturing ease or any other requirements. Atleast two passages (F) which are radially opposite to each other are required for avoiding imbalances in the disc (C). If there are more than two radial air passages, then they should be at equal angular intervals to avoid imbalances. One end of the passages (F) opens into the gallery (D) and the other end is exposed to oil of the enclosed mechanical system. The oil gallery (D) enables the linking of all the air passages (F) with the axial air passage (B). The oil gallery (D) also guides / funnels the exit of entered oil, back into the system, through the passages (F). The oil deflector (E) is shaped such that it prevents dripping oil from entering the passages (F), whereas it does not prevent the oil exit from the radial passages (F). The surface (H) of the shaft (A), the oil deflector (E) and the external surfaces of disc (C) are exposed to the splashing / dripping /stationary oil inside the mechanical system. The oil deflector (E) id obliquely extended from the shaft to cover the radial openings (F) to avoid entry of the dripping oil into the passages (F).

The oil that splashes around and dripped is deflected by the oil deflector (E) so that most of the splashing and dripping oil does not enter the passages (F). In case the oil enters into the passages (F) and then into the gallery (D), the oil gets ejected out back into the enclosed system through the passages (F) either by the gravity or by the centrifugal force that occurs due to the rotation of the shaft (A). The oil entering through the passage (F) at top will removed through the passage (F) at bottom due to gravity. The air pumping effect produced by the air passages (F) because of centrifugal force, when the shaft (A) is rotating is compensated by the air pumping effect of passages (G) through centrifugal force. Thus this arrangement allows air exchange between the outside and inside of the mechanical system, yet not allow the oil to come out of the system.

Thus this system prevents oil entry into the radial passage even during low speeds or even when the shaft is stationary. Also these systems have means to avoid the air pumping effect of the radial passages, which can be an issue for some systems.

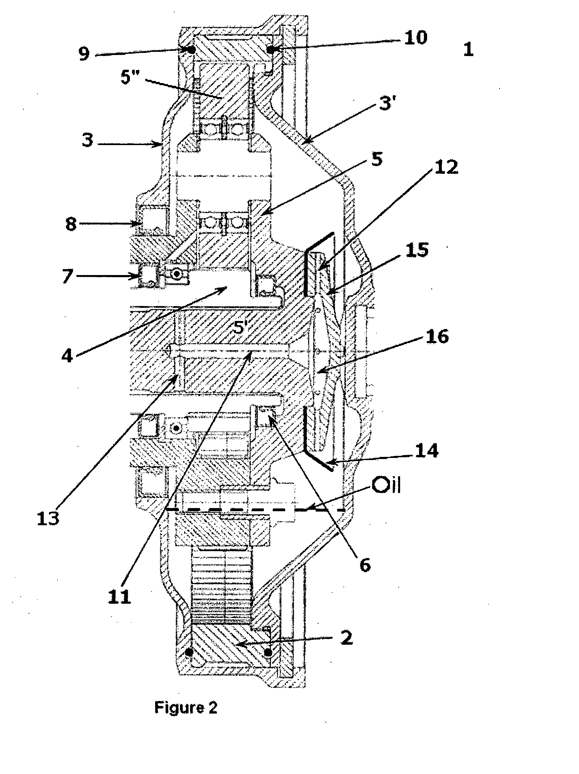

Referring to FIG. 2, an epicyclic system (1) having a sun gear (4), an internal gear (2) and planet gears (5") with planet carrier (5). To the outermost member of the epicyclic gear train, that is in this case the Internal Gear (2) is attached with a left extension (3) and a right extension (3'). One of these extensions (3) or (3') can also be manufactured integral with the internal gear (2). These extensions (3) and (3') along with the internal gear (2) form an envelope around the sun gear (4), planet gears (5") and the planet carrier (5). The envelope thus formed contains the lubricating oil for the epicyclic gear system. The oil contained in this envelope provides lubrication for the epicyclic system only when there is a relative motion between the internal gear (2) and the planet carrier (5). Thus this lubricating system is efficient as it works only when lubrication is required, and also avoids a lubricating pump and the complex oil passages. The extensions (3) and (3') can also be used as drive elements to feed power into epicyclic or take out power out of epicyclic. The arrangements of well known elements in this epicyclic system like bearings, fasteners, rotary oil seals (6, 7, and 8) and stationary oil seals / "O" Rings (9 and 10) which would from a part of every transmission system is not discussed here.

To provide an effective breathing system for the enveloped epicylic system (1) a breathing arrangement is provided with the planet carrier shaft (5'). Any rotating shaft can be used for the breathing arrangement, however the shaft which is predominantly rotating during working of the system is preferable. The planet carrier shaft (5') has atleast one axial air passge (11). An oil deflector (14) and disc (15) are attached/built-in to the shaft (5'). The deflector (14) is made of either plastic or sheet metal and attached to the shaft (5') by suitable fastening means. The mating surface between them is sealed to prevent oil entry between them. An oil gallery (16) is formed by the disc (15) and the shaft (5'). One end of the air passage (11) is connected or communicating to the oil gallery (16) and the other end is communicating directly to the atmosphere outside of the mechanical system or is communicating to the atmosphere outside of the mechanical system through atleast two radial passages (13) on the shaft (5'). The air passages (13) can be inclined to the axis of the shaft (5') for the convenience of packaging or manufacturing ease or any other requirements. Atleast two passages (13) which are radially opposite to each other are required for avoiding imbalances in the shaft (5'). If there are more than two radial air passages, then the passages should be at equal angular intervals to avoid imbalances. The disc (15) has at least two radial oil passages (12). The air passages (12) can also be inclined to the axis of the shaft (5') for the convenience of packaging or manufacturing ease or any other requirements. Atleast two passages (12) which are radially opposite to each other are required for avoiding imbalances in the disc (15). If there are more than two radial air passages, then the passages should be at equal angular intervals to avoid imbalances. One end of the passages (12) opens into the gallery (16) and the other end is exposed to oil of the epicyclic system (1). The oil gallery (16) enables the linking of all the air passages (12) with the axial air passage (11). The oil gallery (16) also guides / funnels the exit of entered oil, back into the system, through the passages (12). The oil deflector (14) is shaped such that it prevents dripping oil from entering the passages (12), whereas it does not prevent the oil exit from the radial passages (12).

The oil that splashes around and dripped is deflected by the oil deflector (14) so that most of the splashing and dripping oil does not enter the passages (12). In case the oil enters into the passages (12) and then into the gallery (16), it gets ejected out back into the mechanical system through the passages (12) either because of the gravity or because of the centrifugal force that occurs due to the rotation of the shaft (5'). The oil entering through the passage (12) at top will removed through the passage (12) at bottom due to gravity. The air pumping effect produced by the air passages (12) because of centrifugal force, when the shaft (5') is rotating is compensated by the air pumping effect of passages (13) through centrifugal force. Thus this arrangement allows air exchange between the outside & inside of the mechanical system, yet not allow the oil to come out of the system. The system prevents oil entry into the radial passage even during low speeds or even when the shaft is stationary.

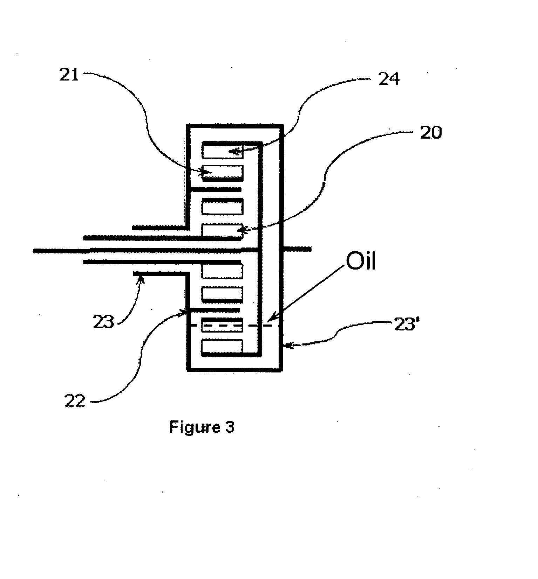

Figure 3 presents a sketch of the invented lubricating arrangement for a epicyclic gear system with the planet carrier extended to form the outermost member of the epicyclic. The system consists of a sun gear (20) which meshes with a planet gear set (21). The planet gear set (21) meshes with the internal gear (24). The planet carrier (22) carries the planet gear set (21). The planet carrier (22) has a left extension (23) and a right extension (23'). These extensions (23 & 23') along with the planet carrier (22) form an envelope around the sun gear (20), the internal gear (24) and the planet gear set (21). The envelope thus formed contains the lubricating oil for the epicyclic gear system. The oil contained in this envelope provides lubrication for the epicyclic system only when there is a relative motion between the internal gear (24) & the planet carrier (22). Thus this lubricating system is efficient as it works only when lubrication is required, and also avoids a lubricating pump and complex oil passages. The extensions (23 & 23') can also be used as drive elements to feed power into epicyclic or to take out power out of epicyclic. The known elements like bearings, fasteners, rotary oil seals & stationary oil seals which would from a part of every transmission system is not discussed here. A breathing arrangement as mentioned above with reference to figure 1 can be incorporated in the shaft of planet carrier or the shaft of internal gear to communicate with the outside of the enveloped epicyclic system. Any rotating shaft can be used for the breathing arrangement, however a shaft which is predominantly rotating during system working would be preferred. This breathing arrangement will provide an efficient breathing passage for the enveloped epicylic system.

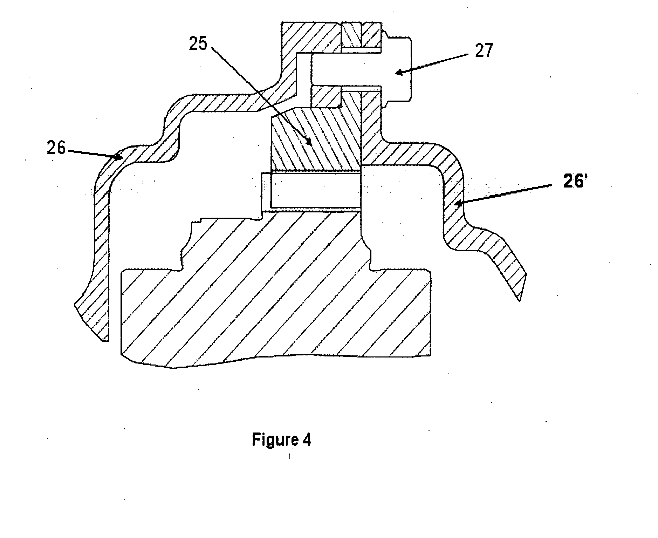

Figure 4 presents a sketch of the lubricating arrangement according to the presnt invention for an epicyclic gear system, with alternative sealing, assembly & oil drain arrangement provided at the outermost member of the epicyclic. To the outermost member of the epicyclic that is the internal gear (25) in this case (sketch) is connected the left extension (26) & the right extension (26') by bolts (27). The bolts (27) are equally spaced. The envelope thus formed by these elements hold the lubricating oil for the epicyclic. This arrangement avoids stationary seals / "O" rings as used in arrangement shown in Figure 2. The bolts (27) can also be used to drain oil or fill oil into the epicyclic, making the servicing aspect easy. Any one of the bolts (27) can be used for filling the oil & the bolt diametrically opposite to this filling bolt can be used for draining the oil, making the servicing aspect easy. The bolts (27) can also be magnetic to hold & retain the metallic derbis generated during the lifetime of the epicyclic. As an alternative suitable plug can be provided to fill or drain the oil in the enclosed system. The extensions (26 & 26') can also be used as drive elements to feed power into epicyclic or take out power out of epicyclic. A breathing arrangement as mentioned above with reference to figure 1 can be incorporated in the shaft of planet carrier or the shaft of internal gear to communicate with the outside of the enveloped epicyclic system. This breathing arrangement will provide an efficient breathing passage for the enveloped epicylic system.

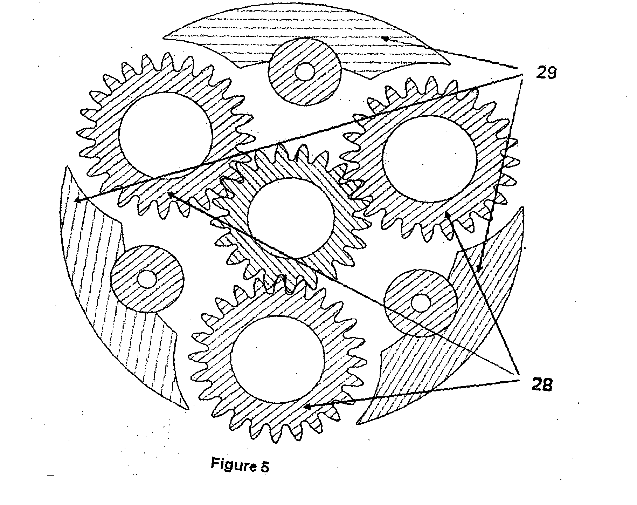

Figure 5 presents a sketch of the arrangement to reduce the oil quantity in the system & for streamlining the oil flow for reducing losses in the system. Between the planet gears (28) are placed oil guides (29) which reduce the oil level in the system & as well streamline the oil flow / avoid turbulence in the system. This makes the system more efficient.

The foregoing description is a specific embodiment of the present invention. It should be appreciated that this embodiment is described for purpose of illustration only, and that numerous alterations and modifications may be practiced by those skilled in the art without departing from the spirit and scope of the invention. It is intended that all such modifications and alterations be included insofar as they come within the scope of the invention as claimed.

## Claims

1. A breathing arrangement for an enclosed mechanical system comprising:
a shaft (A, 5') with at least one air passage (B, 11) extending axially;
at least one first opening (F, 12) for admitting air and fluidly communicating with said passage and said enclosed system;
at least one second opening (G, 13) extending from said passage and communicating with the atmosphere; and **characterised by**
an oil deflector (E, 14) attached to said shaft for preventing entry of splashing or dripping oil to said at least one first opening; said shaft having two such second radial openings positioned opposite to each other.

2. The breathing arrangement as claimed in claim 1, wherein said at least one first opening is formed by a disc (C, 15) having an oil gallery (D, 16) at its center and at least one radial opening (F, 12) communicating with said oil gallery at one end and said enclosed system at the other end, said disc being attached to said shaft in such a way that said passage opens to said gallery.

3. The breathing arrangement as claimed in claim 2, wherein said disc has two such radial openings communicating with the system and positioned opposite to each other.

4. The breathing arrangement as claimed in any one of the preceding claims, wherein said openings are inclined to the axis of said shaft.

5. The breathing arrangement as claimed in claim 1, wherein said shaft has a plurality of first or second openings positioned at equal angular intervals.

6. The breathing arrangement as claimed in claim 1, wherein said oil deflector obliquely extends from the shaft to cover the first opening from entry of splashing or dripping oil.

7. The breathing arrangement as claimed in any one of the preceding claims, wherein said mechanical system is an epicyclic system (1) having a sun gear (4, 20), planetary gears (5', 21, 28) connected to a planet carrier (5, 22) and an internal gear (2, 24, 25), said planetary gears meshing with said sun gear and said internal gear.

8. The breathing arrangement as claimed in claim 7, wherein the shaft of said mechanical system is connected to the planet carrier or extension of the internal gear or the sun gear.

9. The breathing arrangement as claimed in either of claims 7 or 8, wherein said internal gear is extended to form an envelope to enclose the sun gear and planetary gears.

10. The breathing arrangement as claimed in either of claims 7 or 8, wherein said planet carrier is extended to form an envelope to enclose the sun gear, planetary gears and internal gear.

11. The breathing arrangement as claimed in either of claims 9 or 10 as dependent on claim 8 as dependent on claim 7 as directly dependent on claim 3, wherein said closed envelope is provided with oil for lubrication.

12. The breathing and lubricating arrangement as claimed in either of claims 9 or 10 as dependent on claim 8 as dependent on claim 7 as directly dependent on claim 3, wherein oil guides ((29) are provided to reduce the oil quantity in the system and to reduce turbulences or streamline the oil flow.

13. The breathing arrangement as claimed in either of claims 9 or 10 as dependent on claim 8 as dependent on claim 7 as directly dependent on claim 3, wherein said envelope is provided with a plug for filling or draining the oil.

14. The breathing arrangement as claimed in either of claims 9 or 10 as dependent on claim 8 as dependent on claim 7 as directly dependent on claim 3, wherein said internal gear and the extensions are fastened by a fastener (27).

15. The breathing arrangement as claimed in claim 14, wherein a through hole for adapting said fastener acts as a passage for filling or draining the oil.

## Patentansprüche

1. Eine Entlüftungsanordnung für ein eingekapseltes mechanisches System, die Folgendes umfasst:
eine Welle (A, 5') mit mindestens einem sich axial erstreckenden Luftkanal (B, 11);
zumindest eine erste Lufteintrittsöffnung (F, 12) in fluidischer Verbindung mit besagtem Luftkanal und besagtem eingekapselten System;
zumindest eine zweite Öffnung (G, 13), die sich vom besagten Kanal erstreckt und mit der Atmosphäre verbunden sowie durch Folgendes gekennzeichnet ist:
einen an der besagten Welle angebrachten Öldeflektor (E, 14), um zumindest an der besagten ersten Öffnung zu verhindern, dass dort Ölspritzer oder -tropfen eindringen; wobei die besagte Welle mit zwei gegenüber liegenden, zweiten derartigen Radialöffnungen versehen ist.

2. Die Anspruch 1 entsprechende Entlüftungsanordnung, wobei die zumindest eine besagte erste Öffnung durch eine Scheibe (C, 15) gebildet wird, die an ihrem Mittelpunkt einen Ölkanal (D, 16) sowie zumindest eine radiale Öffnung (F, 12) hat, die an einem Ende mit dem besagten Ölkanal und am anderen Ende mit dem besagten eingekapselten System in Verbindung steht, wobei die besagte Scheibe an der besagten Welle derartig angebracht ist, damit der besagte Durchgang zum besagten Kanal hin geöffnet ist.

3. Die Anspruch 2 entsprechende Entlüftungsanordnung, wobei die besagte Scheibe zwei derartige radiale Öffnungen hat, die mit dem System in Verbindung stehen und sich gegenüber liegen.

4. Die einem vorstehenden Anspruch entsprechende Entlüftungsanordnung, wobei die besagten Öffnungen zur Achse der besagten Welle hin geneigt sind.

5. Die Anspruch 1 entsprechende Entlüftungsanordnung, wobei die besagte Welle eine Vielzahl erster oder zweiter Öffnungen hat, die in gleichen Winkelabständen positioniert sind.

6. Die Anspruch 1 entsprechende Entlüftungsanordnung, wobei sich der besagte Öldeflektor schräg von der Welle erstreckt, um die erste Öffnung gegen das Eindringen von Ölspritzern oder -tropfen abzudecken.

7. Die einem vorstehenden Anspruch entsprechende Entlüftungsanordnung, wobei das besagte mechanische System ein epizyklisches System (1) ist, das ein Sonnenrad (4, 20), ein mit einem Planetenträger (5, 22) verbundenes Planetengetriebe (5', 21, 28) und ein Innenzahnrad (2, 24, 25) hat und das besagte Planetengetriebe mit dem besagten Sonnenrad und dem besagten Innenzahnrad in Eingriff steht.

8. Die Anspruch 7 entsprechende Entlüftungsanordnung, wobei die Welle des besagten mechanischen Systems mit dem Planetenträger oder der Verlängerung des Innenzahn- oder Sonnenrads verbunden ist.

9. Die Ansprüchen 7 oder 8 entsprechende Entlüftungsanordnung, wobei das besagte Innenzahnrad verlängert ist, um ein Gehäuse zu bilden, das das Sonnenrad und das Planetengetriebe einkapselt.

10. Die Ansprüchen 7 oder 8 entsprechende Entlüftungsanordnung, wobei der besagte Planetenträger verlängert ist, um ein Gehäuse zu bilden, das das Sonnenrad, das Planetengetriebe und das Innenzahnrad einkapselt.

11. Die Ansprüchen 9 oder 10 entsprechende Entlüftungsanordnung in Abhängigkeit von Anspruch 8, sofern dieser von Anspruch 7 bzw. der Letztere unmittelbar von Anspruch 3 abhängig ist, wobei das besagte geschlossene Gehäuse zum Schmieren mit Öl versehen ist.

12. Die Ansprüchen 9 oder 10 entsprechende Entlüftungs- und Schmieranordnung in Abhängigkeit von Anspruch 8, sofern dieser von Anspruch 7 bzw. der Letztere unmittelbar von Anspruch 3 abhängig ist, wobei Ölführungen (29) vorgesehen sind, um die im System befindliche Ölmenge zu reduzieren, sowie um Turbulenzen des Ölstroms zu reduzieren oder um den Ölstrom zu optimieren.

13. Die Ansprüchen 9 oder 10 entsprechende Entlüftungsanordnung in Abhängigkeit von Anspruch 8, sofern dieser von Anspruch 7 bzw. der Letztere unmittelbar von Anspruch 3 abhängig ist, wobei das besagte Gehäuse mit einem Stöpsel versehen ist, um das Öl aufzufüllen oder abzulassen.

14. Die Ansprüchen 9 oder 10 entsprechende Entlüftungsanordnung in Abhängigkeit von Anspruch 8, sofern dieser von Anspruch 7 bzw. der Letztere unmittelbar von Anspruch 3 abhängig ist, wobei das besagte Innenzahnrad und die Verlängerungen mit einem Befestigungselement (27) befestigt werden.

15. Die Anspruch 14 entsprechende Entlüftungsanordnung, wobei ein Durchgangsloch zum Anpassen des besagten Befestigungselements als Kanal zum Füllen oder Ablassen des Öls dient.

## Revendications

1. Un dispositif de ventilation pour un système mécanique fermé comprenant :
un arbre (A, 5') avec au moins un passage d'air (B, 11) s'étendant axialement ;
au moins une première ouverture (F, 12) pour admettre de l'air et communiquer de manière fluidique avec ledit passage et ledit système fermé ;
au moins une seconde ouverture (G, 13) s'étendant dudit passage et communiquant avec l'atmosphère ; et **caractérisé par**
un déflecteur d'huile (E, 14) attaché au dit arbre pour empêcher l'entrée d'éclaboussures ou de gouttes d'huile dans la dite au moins une première ouverture ; ledit arbre ayant deux secondes ouvertures radiales de ce genre positionnées à l'opposé de l'une à l'autre.

2. Le système de ventilation selon la revendication 1, dans lequel ladite au moins une première ouverture est formée par un disque (C, 15) possédant une galerie pour l'huile (D, 16) en son centre et au moins une ouverture radiale (F, 12) communiquant avec ladite galerie pour l'huile à une extrémité et ledit système fermé à l'autre extrémité, ledit disque étant attaché au dit arbre de telle manière que ledit passage s'ouvre sur ladite galerie.

3. Le système de ventilation selon la revendication 2, dans lequel ledit disque possède deux ouvertures radiales de ce genre communiquant avec le système et positionnées à l'opposé de l'une à l'autre.

4. Le système de ventilation selon l'une quelconque des revendications précédentes, dans lequel lesdites ouvertures sont inclinées par rapport à l'axe dudit arbre.

5. Le système de ventilation selon la revendication 1, dans lequel ledit arbre possède une pluralité de premières et secondes ouvertures positionnées à intervalles angulaires égaux.

6. Le système de ventilation selon la revendication 1, dans lequel ledit déflecteur d'huile s'étend de manière oblique à partir de l'arbre pour couvrir la première ouverture pour empêcher l'entrée d'éclaboussures ou de gouttes d'huile.

7. Le système de ventilation selon l'une quelconque des revendications précédentes, dans lequel ledit système mécanique est un système épicycloïdal (1) possédant un engrenage solaire (4, 20), des engrenages planétaires (5', 21, 28) connectés à un porte-satellites (5, 22) et un engrenage interne (2, 24, 25), lesdits engrenages planétaires s'engrenant avec ledit engrenage solaire et ledit engrenage interne.

8. Le système de ventilation selon la revendication 7, dans lequel l'arbre dudit système mécanique est connecté au porte-satellites ou une extension de l'engrenage interne ou de l'engrenage solaire.

9. Le système de ventilation selon l'une des revendications 7 ou 8, dans lequel ledit engrenage interne est étendu pour former une enveloppe pour enfermer l'engrenage solaire et les engrenages planétaires.

10. Le système de ventilation selon l'une des revendications 7 ou 8, dans lequel ledit porte-satellites est étendu pour former une enveloppe pour enfermer l'engrenage solaire, les engrenages planétaires et l'engrenage interne.

11. Le système de ventilation selon l'une des revendications 9 ou 10 qui est dépendant de la revendication 8 qui est dépendant de la revendication 7 qui est directement dépendant de la revendication 3, dans lequel ladite enveloppe fermée est pourvue d'huile pour la lubrification.

12. Le système de ventilation selon l'une des revendications 9 ou 10 qui est dépendant de la revendication 8 qui est dépendant de la revendication 7 qui est directement dépendant de la revendication 3, dans lequel des guides d'huile (29) sont pourvus pour réduire la quantité d'huile dans le système et pour réduire les turbulences ou rationaliser le flux d'huile.

13. Le système de ventilation selon l'une des revendications 9 ou 10 qui est dépendant de la revendication 8 qui est dépendant de la revendication 7 qui est directement dépendant de la revendication 3, dans lequel ladite enveloppe est pourvue d'un bouchon pour le remplissage ou le drainage de l'huile.

14. Le système de ventilation selon l'une des revendications 9 ou 10 qui est dépendant de la revendication 8 qui est dépendant de la revendication 7 qui est directement dépendant de la revendication 3, dans lequel ledit engrenage interne et les extensions sont fixés par un élément de fixation (27).

15. Le système de ventilation selon la revendication 14, dans lequel un trou débouchant pour adapter ledit élément de fixation fait fonction de passage pour le remplissage ou le drainage de l'huile.
